Europäisches Patentamt

European Patent Office

Office européen des brevets

(11) Publication number: 0 512 586 A1

# EUROPEAN PATENT APPLICATION

(21) Application number: 92200787.7

(22) Date of filing: 19.03.92

(51) Int. Cl.5: F16H 1/40

(30) Priority: 10.04.91 NL 9100630

(43) Date of publication of application:
11.11.92 Bulletin 92/46

(84) Designated Contracting States:
DE ES FR GB IT NL SE

(71) Applicant: SKF Industrial Trading &
Development Co, B.V.
Kelvinbaan 16
NL-3439 MT Nieuwegein(NL)

(72) Inventor: Beton, Gordon Michael
59, Baily Brooks Lane
Roade, Northamptonshire(GB)

(74) Representative: de Bruijn, Leendert C. et al
Nederlandsch Octrooibureau
Scheveningseweg 82 P.O. Box 29720
NL-2502 LS Den Haag(NL)

(54) Differential.

(57) In a differential the pinion (2) in form of bevel gear is equipped with a cap-shaped element (3) whose cylindrical mantle (3') forms the inner race of a reller bearing, by means of which the shaft section (1) is borne in the housing of the differential.

In the bottom (3'') of the cap-shaped element (3) an eccentric opening (4) has been made through which extends the shaft of a bolt (6), which is screwed into a bore (5).

Between the head (6') of the bolt (6) and the bottom (3'') an elongated intermediate element (7) has been inserted, of which one end shaped into an extension (7') reaches into a second opening (9) in the bottom (3'') and the other end (7'') is turned outward against the head (6') of the bolt (6).

The objective of the invention is to avoid the phenomenon of weep in the cap-shaped element and unfavorable loads, shocks and similar mechanical forces.

fig - 1

Rank Xerox (UK) Business Services

The invention concerns a differential including a housing containing a pinion in the form of a bevel gear which is carried in the housing on bearings, together with a shaft section with which it forms one unit and which extends from the wide top surface, whereby this shaft section is connected to and is driven by a drive shaft, a crown wheel which operates in conjunction with the pinion and is coupled to or forms one unit with a satellite housing which rotates on bearings in the housing, in which satellite housing two freely rotating satellites are carried on bearings opposite one another which both operate in conjunction with two toothed wheels located opposite one another which are each connected with a wheel shaft, whereby the pinion forms one unit with a second shaft section extending from the narrow top surface which is carried in the housing by means of a roller bearing whose outer race is fashioned in an opening made in the housing and whose inner race is fashioned around the second shaft section and is formed by the cylindrical outer circumferential surface of a generally cap-shaped element with a bottom and a upright cylindrical mantle connected to it, which element is placed from the outside over the second shaft section so that the inner surface of the bottom of the element rests against the top surface of the shaft section, whereby an opening has been made in the bottom of the element and, in the top surface of the shaft section, a blind bore has been fashioned with a female screw thread and a bolt has been screwed through the opening into the bore. A similar differential is known from the Dutch patent application 8902771.

It has been observed that when the known differential is in operation, the phenomenon of creep may occur in the aforementioned cap-shaped element forming the inner race of the inside roller bearing of the pinion due to, e.g., unfavorable bearing loads, shocks and similar mechanical forces, as a result of which the element itself may start moving around the shaft section, something which is highly undesirable.

The objective of the invention is to create a differential of the type mentioned which does not present this disadvantage.

The objective is reached because in the differential according to the invention the aforementioned opening and the aforementioned bore are fashioned at a distance from, respectively, the center of the bottom of the cap-shaped element, and the center of the top surface of the shaft section, so that the aforementioned bolt is offset. This measure prevents the cap-shaped element itself from moving around the shaft section.

In an advantageous manner, an intermediate element may be inserted between the head of the screwed-in bolt and the outer surface of the bottom of the cap-shaped element, which intermediate element consists of an essentially elongated plate-shaped element which has an opening at one end where the shaft of the bolt passes through, and whose other end is equipped with means which interact with the aforementioned bottom of the cap-shaped element. On account of the intermediate element the area over which the bolt exerts pressure on the bottom of the cap-shaped element increases, while this intermediate element itself is held by means of the aforementioned means of interaction so as to be immobile.

The aforementioned means of interaction are preferably formed by a projection which reaches into a second opening formed in the bottom of the cap-shaped element. In this respect, it is advantageous to turn the end of the intermediate element - near the opening formed in the element - outward against the head of the bolt so as to secure the bolt.

The invention will be described further by means of the drawing in which

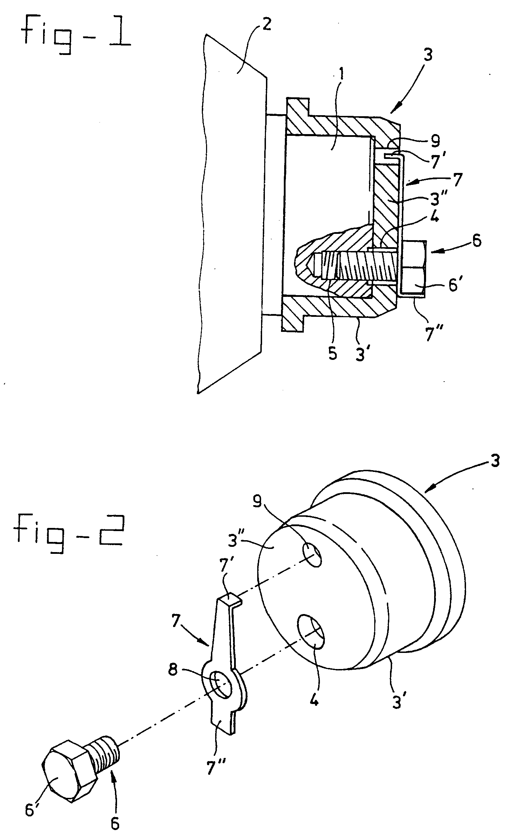

Figure 1 shows an axial section of the shaft section of the pinion and the cap-shaped element attached to it, and

Figure 2 shows the detached components of Figure 1.

As shown in the drawing, the shaft section 1 which forms one unit with the pinion 2, is equipped with a cap-shaped element 3 whose cylindrical mantle 3' forms the inner race of a roller bearing - not shown - by means of which the shaft section 1 is borne in the housing of the differential. In the bottom 3'' of the cap-shaped element 3, an eccentric opening 4 has been made which is aligned with a blind bore 5 formed in the shaft section 1 and equipped with a female screw thread. Through the opening 4, the shaft extends of a bolt 6 which is screwed into the bore 5.

Between the head 6' of the bolt 6 and the bottom 3'' of the cap-shaped element 3, an elongated intermediate element 7 has been inserted which is equipped with an opening 8 for the passage of the bolt 6 and of which the end shaped into an extension 7' reaches into a second opening 9 formed in the bottom 3'' of the cap-shaped element 3. The other end 7'' of the intermediate element 7 is turned outward against the head 6' of the bolt 6.

## Claims

1. Differential including a housing containing a pinion in the form of a bevel gear which is carried in the housing on bearings, together with a shaft section with which it forms one unit and which extends from the wide top surface, whereby this shaft section is connected to and is driven by a drive shaft, a crown wheel which operates in conjunction with the pinion and is coupled to or forms one unit with a satellite housing which rotates on bearings in the housing, in which satellite housing two freely rotating satellites are carried on bearings opposite one another which both operate in conjunction with two toothed wheels located opposite one another which are each connected with a wheel shaft, whereby the pinion forms one unit with a second shaft section extending from the narrow top surface which is carried in the housing by means of a roller bearing whose outer race is fashioned in an opening made in the housing and whose inner race is fashioned around the second shaft section and is formed by the cylindrical outer circumferential surface of a generally cap-shaped element with a bottom and a upright cylindrical mantle connected to it, which element is placed from the outside over the second shaft section so that the inner surface of the bottom of the element rests against the top surface of the shaft section, whereby an opening has been made in the bottom of the element and, in the top surface of the shaft section, a blind bore has been fashioned with a female screw thread and a bolt has been screwed through the opening into the bore, characterized by the fact that said opening (4) and said opening (5) have been made at a distance from the center of, respectively, the bottom (3'') of the cap-shaped element (3), and the center of the top surface of the shaft section (1), so that the location of said bolt (6) is offset.

2. Differential according to Claim 1, characterized by the fact that an intermediate element (7) has been inserted between the head (6') of the screwed-in bolt (6) and the outer surface of the bottom (3'') of the cap-shaped element (3), which intermediate element consists of an essentially elongated plate-shaped element which has an opening (8) at one end where the shaft of the bolt (6) passes through, and whose other end is equipped with means (7') which interact with said bottom (3'').

3. Differential according to Claim 2, characterized by the fact that said means of interaction are formed by a projection (7') which reaches into a second opening (9) formed in the bottom (3'').

4. Differential according to Claims 2 or 3, characterized by the fact that the end (7'') of the intermediate element (7) - near the opening (8) formed in the element - is turned outward against the head (6') of the bolt (6).

Fig-1

Fig-2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-1 450 805 (RHEINSTAHL HANOMAG AG)<br>* the whole document *<br>--- | 1-4 | F16H1/40 |
| Y | EP-A-0 412 536 (KLÖCKNER-HUMBOLDT-DEUTZ AG)<br>* the whole document *<br>--- | 1,2 | |
| Y | GB-A-2 138 912 (BRITISH NUCLEAR FUELS LTD.)<br>* the whole document *<br>--- | 2-4 | |
| Y | FR-A-2 629 880 (TOYODA JIDOSHOKKI K.K.)<br>* page 7, line 30 - page 10, line 10; claims 8,9 *<br>--- | 1 | |
| P,Y | EP-A-0 427 333 (SKF INDUSTRIAL TRADING &DEVELOPMENT CO)<br>* the whole document *<br>----- | 1 | |
| | | | **TECHNICAL FIELDS SEARCHED (Int. Cl.5)**<br><br>B60K<br>F16B<br>F16C<br>F16H |

The present search report has been drawn up for all claims

| Place of search | Date of completion of the search | Examiner |
|---|---|---|
| THE HAGUE | 23 JUNE 1992 | TOPP-BORN S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

               

& : member of the same patent family, corresponding document

EPO FORM 1503 03.82 (P0401)